# EUROPÄISCHE PATENTSCHRIFT

(11) **EP 1 786 966 B1**
(45) Veröffentlichungstag und Bekanntmachung des Hinweises auf die Patenterteilung: **07.10.2009**
(21) Anmeldenummer: 05768036.5
(22) Anmeldetag: 03.08.2005
(51) Int. Cl.: D04H 1/60, B29C 70/50

(54) **EINRICHTUNG ZUR THERMISCHEN BEHANDLUNG EINES VLIESES ODER EINES VLIESVORPRODUKTES**
INSTALLATION FOR THERMALLY TREATING A NONWOVEN OR A PRECURSOR NONWOVEN
DISPOSITIF DE TRAITEMENT THERMIQUE D'UN NON TISSE OU D'UN PRODUIT SEMI-FINI NON TISSE

(30) Priorität: 25.08.2004 AT 14362004
(43) Veröffentlichungstag der Anmeldung: 23.05.2007
(73) Patentinhaber: Angleitner, Helmut, 4600 Wels (AT)
(72) Erfinder: Angleitner, Helmut, 4600 Wels (AT)
(74) Vertreter: Hofinger, Stephan
(86) Internationale Anmeldenummer: PCT/AT2005/000308
(87) Internationale Veröffentlichungsnummer: WO 2006/021012

(56) Entgegenhaltungen:
- DE-A1- 19 714 348
- DE-B- 1 303 588
- US-A- 4 642 153
- US-A1- 2003 162 461

## Beschreibung

Die vorliegende Erfindung betrifft eine Einrichtung zur thermischen Behandlung eines Vlieses oder eines Vliesvorproduktes mit mindestens einer Heizzone und mindestens einer Kühlzone, einem oberen Förderband, einem unteren Förderband und zumindest einer zusätzlichen Presseinrichtung, wobei das Vlies oder Vliesvorprodukt zwischen den Förderbändern transportierbar ist und das obere sowie das untere Förderband sich als durchgehende Bänder zumindest über den Bereich der Heizzone, der Kühlzone und einen gegebenenfalls dazwischen angeordneten Zwischenbereich erstrecken und die Förderbänder sowie das dazwischen transportierbare Vlies oder Vliesvorprodukt mittels der zusätzlichen Presseinrichtung zumindest bereichsweise zusammendrückbar oder abstützbar sind.

Für die Vliesverfestigung und Kalibrierung sind mehrere gattungsgemäße Einrichtungen beim Stand der Technik bekannt. In einer jeden solchen Einrichtung wird in einer Heizzone ein meist noch nicht in sich verfestigtes Faservlies zuerst erwärmt, um anschließend in einer Kühlzone wieder abgekühlt zu werden. Die thermische Erwärmung erfolgt in der Heizzone in Abhängigkeit von der verwendeten Faser bzw. Fasermischung und dem beigemischten Bindemittel etwa im Bereich von 150 - 200° C. Als Bindemittel können zum Beispiel thermoplastische Fasern, Pulver oder Mischungen daraus mit entsprechenden Schmelzpunkten verwendet werden. Die restliche Matrix des Vliesstoffes kann aus verschiedensten Kunst- oder Naturfasern sowie Mischungen daraus bestehen. Jeder gattungsgemäßen Einrichtung bzw. den dabei verwendeten Verfahren liegt der Gedanke zugrunde, durch Wärmeeinwirkung das Bindemittel zu verflüssigen, das Vlies auf bestimmte Dicke und Dichte zu kalibrieren bzw. zusammenzupressen und zur Verfestigung wieder abzukühlen.

Beim Stand der Technik erfolgt das Heizen und Kühlen mittels Heiz- oder Kühlplatten, welche über physischen Kontakt die Transportbänder heizen oder kühlen, wodurch letztendlich dann das Vlies oder Vliesvorprodukt geheizt oder gekühlt wird. Diese Heiz- bzw. Kühltechnik hat den Nachteil, dass nur geringe Vliesdicken damit effektiv geheizt bzw. gekühlt werden können. Außerdem muss das Vlies oder Vliesvorprodukt außen sehr stark geheizt eventuell sogar überheizt werden, um im Inneren wenigstens ansatzweise die zum Schmelzen bzw. zum Verfestigen des Bindemittels nötigen Temperaturen zu erreichen.

Die Druckschrift DE-A-19714348 offenbart eine Einrichtung zur thermischen Behandlung eines Vlieses gemäß dem Oberbegriff des Anspruchs 1.

Aufgabe der Erfindung ist es, diesen Nachteil des Standes der Technik zu beseitigen.

Dies wird erfindungsgemäß durch die Einrichtung gemäß Anspruch 1 erreicht.

Mittels der heißen und/oder kühlen Gase ist es möglich, das Vlies oder Vliesvorprodukt über seine gesamte Dicke sehr eingehend und gleichmäßig zu heizen oder zu kühlen. Vorzugsweise ist es hierzu vorgesehen, dass die heißen bzw. kühlen Gase das Vlies oder sein Vorprodukt durchströmen. Durch die Erfindung wird es möglich, Vliesgewichte von etwa 100 bis 4.000 g/m² und Vliesdicken zwischen 3 - 200 mm zu erreichen.

Hierbei ist es vorgesehen, das Vlies bzw. Vliesvorprodukt zwischen zwei durchgehenden Förderbändern von der Heizzone bis zur Kühlzone zu transportieren. Erst im Anschluss daran wird der direkte Kontakt. zwischen Vlies bzw. Vliesvorprodukt und den Transportbändern aufgehoben. In diesem Bereich ist das Vlies bzw. Vliesvorprodukt schon soweit abgekühlt, dass es beim Lösen von den Transportbändern nicht mehr an diesen festklebt, womit der Aufwand zum Reinigen der Transportbänder entfällt bzw. auf ein Minimum reduziert wird. Die Verwendung von Gasen ist auch deshalb besonders günstig, weil hierdurch ein Erwärmen bzw. Abkühlen des Vlies bzw. Vliesvorproduktes besonders einfach möglich ist, ohne dass dabei der Kontakt zwischen Vlies bzw. Vliesvorprodukt und den Förderbändern aufgehoben werden müsste, womit ein Festkleben des noch heißen bzw. noch nicht ausreichend abgekühlten Vlieses oder Vliesvorproduktes vermeidbar ist. Die erfindungsgemäß ebenfalls vorgesehene Presseinrichtung zur Kalibrierung bzw. Dicken- und Dichteeinstellung des Vlies oder Vliesvorproduktes greift von außen an die Förderbänder an, sodass auch im Bereich der Kalibrierung kein Loslösen des Vlies oder Vliesvorproduktes von den Förderbändern notwendig ist. Durch das Zusammenpressen bzw. Abstützen der Förderbänder mittels Presseinrichtung können auch sehr hohe Vliesdichten, zum Beispiel bis etwa 280 kg/m³, erreicht werden.

Um ein unmittelbares Einwirken der heißen bzw. kühlen Gase auf das Vlies bzw. Vliesvorprodukt zu vereinfachen, ist es vorteilhaft, dass das untere und/oder das obere Förderband, vorzugsweise regelmäßig verteilte, Öffnungen zum Durchtritt von Gasen aufweist (aufweisen).

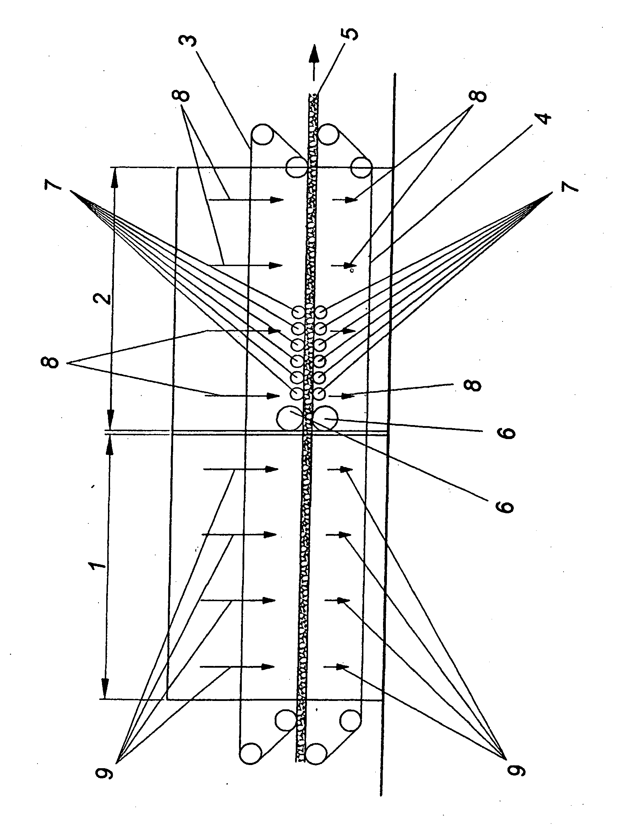

Weitere Vorteile und Einzelheiten der vorliegenden Erfindung werden anhand der beiliegenden Figur erläutert. Diese zeigt ein schematisiertes Ausführungsbeispiel der Erfindung.

Bei dem in der Figur gezeigten sogenannten Thermobonding-Ofen sind die Heizzone 1 und die Kühlzone 2 unmittelbar hintereinander angeordnet. In anderen Ausbildungsformen, welche hier nicht dargestellt sind, kann dazwischen aber auch eine Zwischenzone vorgesehen sein. Das Vlies 5 bzw. Vliesvorprodukt wird durch hier nicht näher dargestellte, aber beim Stand der Technik bekannte Einrichtungen aufbereitet und vor der Heizzone 1 zwischen das untere Transportband 4 und das obere Transportband 3 eingebracht. Beim Transport durch die Heizzone 1 wird das im Vlies bzw. Vliesvorprodukt vorhandene Bindemittel durch die hier nur schematisch dargestellte heiße Luft 9 aktiviert bzw. aufgeschmolzen. Anschließend wird das Vlies 5 bzw. Vliesvorprodukt von denselben Förderbändern 3 und 4 durch die Kühlzone 2 geführt, in der vorzugsweise eine Kühlung mittels der hier ebenfalls nur schematisch durch die Pfeile 8 dargestellten kühlen Luft erfolgt. Zum Heizen, Kühlen und Bewegen der heißen bzw. kühlen Luft können beim Stand der Technik bekannte Heiz- und Kühleinrichtungen bzw. Gebläse verwendet werden. Das heiße bzw. kühle Gas kann zum Beispiel sowohl von oben nach unten als auch von unten nach oben durch die Öffnungen in den Förderbändern und das Vlies oder Vliesvorprodukt strömen. Darüber hinaus sind auch weitere Strömungsrichtungen möglich. Besonders günstig ist es im Sinne einer gleichmäßigen Erhitzung bzw. Abkühlung, wenn die heißen Gase in der Heizzone und/oder die kühlen Gase in der Kühlzone bereichsweise, vorzugsweise abwechselnd, von oben nach unten und von unten nach oben strömen. Hierdurch wird vor allem auch verhindert, dass das Vlies oder sein Vorprodukt durch permanentes Anblasen von einer Seite deformiert wird. Zum Kühlen kann in der Regel Außenluft verwendet werden, welche gegebenenfalls mittels Kühlaggregaten weiter gekühlt werden kann.

Die Kalibrierung, also die Einstellung der Dicke und Dichte des Vlies 5 bzw. Vliesvorproduktes, erfolgt günstigerweise unmittelbar hinter der Heizzone 1 mittels einer entsprechend ausgebildeten Presseinrichtung. An dieser Stelle lässt sich das Vlies mit dem geringsten Druck kalibrieren. Die Pressvorrichtung weist im gezeigten Ausführungsbeispiel zunächst zwei größere zueinander gegenüberliegend angeordnete Walzen 6 auf, zwischen denen das obere und das untere Förderband 3, 4 sowie das dazwischen transportierbare Vlies 5 oder Vliesprodukt zusammendrückbar oder abstützbar sind. Die anschließend folgenden kleineren Kalibrierwalzen 7, welche bis weit in die Kühlzone 2 hineinreichen, können gegebenenfalls die eingestellte Vliesdicke bzw. - dichte noch leicht bis zum Beginn der Vliesverfestigung in der Kühlzone aufrechterhalten, ohne dass hierbei die Belastbarkeit der Transportbänder überschritten würde. Als Alternative zu den paarweise unmittelbar oberhalb und unterhalb der Transportbänder 3, 4 angeordneten Walzen 6 und 7 können auch entsprechend geformte Schlitten oder dergleichen zum Abstützen bzw. Zusammenpressen der Förderbänder 3, 4 verwendet werden. Es ist auch eine Kombination aus Abstützschlitten und Walzen denkbar. Die Walzen werden wegen der Zugentlastung der Förderbänder in der Regel bevorzugst. Sie können freilaufend aber auch selbst angetrieben sein. Um die freie Einstellbarkeit der Vliesdicke bzw. -dichte zu gewährleisten, ist es jedenfalls günstig, dass der Abstand zwischen dem oberen und dem unteren Förderband 3, 4 mittels der Presseinrichtung zumindest in einem Teilbereich einstellbar bzw. verringerbar ist.

Im Anschluss an bzw. im Auslauf der Kühlzone 2 ist das Vlies 5 genügend gekühlt, sodass dieses bzw. dessen Fasern beim Ablösen nicht mehr an den Transportbändern 3 und 4 kleben bleibt, wodurch eine sonst sehr mühevolle und langwierige tägliche Reinigung der Bänder 3, 4 vermieden werden kann.

Normalerweise ist bei den erfindungsgemäßen Einrichtungen vorgesehen, dass die Heizzone 1 in Transportrichtung der Bänder 3 und 4 gesehen vor der Kühlzone 2 angeordnet ist. In weiteren, hier nicht dargestellten Ausführungsvarianten kann aber auch eine Abfolge von mehreren Heiz- und Kühlzonen 1, 2 vorgesehen sein, bei denen das Vlies 5 bzw. Vliesvorprodukt mehrere Durchläufe mit Erhitzen, Kalibrieren und Abkühlen erfährt.

## Patentansprüche

1. Einrichtung zur thermischen Behandlung eines Vlieses (5) oder eines Vliesvorproduktes mit mindestens einer Heizzone (1) und mindestens einer Kühlzone (2), einem oberen Förderband (3), einem unteren Förderband (4) und zumindest einer zusätzlichen Presseinrichtung (6, 7), wobei das Vlies (5) oder Vliesvorprodukt zwischen den Förderbändern (3, 4) transportierbar ist und das obere sowie das untere Förderband (3, 4) sich als durchgehende Bänder zumindest über den Bereich der Heizzone (1), der Kühlzone (2) und einen gegebenenfalls dazwischen angeordneten Zwischenbereich erstrecken und die Förderbänder (3, 4) sowie das dazwischen transportierbare Vlies (5) oder Vliesvorprodukt mittels der zusätzlichen Presseinrichtung (6, 7) zumindest bereichsweise zusammendrückbar oder abstützbar sind wobei dass das Vlies (5) oder Vliesvorprodukt in der Heizzone (1) mittels heißer Gase, vorzugsweise mittels heißer Luft, heizbar und/oder in der Kühlzone (2) mittels kühler Gase, vorzugsweise mittels kühler Luft, kühlbar ist **dadurch gekennzeichnet, dass** die Presseinrichtung (6, 7) in Transportrichtung der Förderbänder (3, 4) gesehen, vorzugsweise unmittelbar, hinter der Heizzone (1) angeordnet ist.

2. Einrichtung nach Anspruch 1, **dadurch gekennzeichnet, dass** das untere und/oder das obere Förderband (3, 4), vorzugsweise regelmäßig verteilte, Öffnungen zum Durchtritt von Gasen aufweist (aufweisen).

3. Einrichtung nach einem der Ansprüche 1 oder 2, **dadurch gekennzeichnet, dass** die heißen Gase in der Heizzone (1) und/oder die kühlen Gase in der Kühlzone (2) bereichsweise, vorzugsweise abwechselnd, von oben nach unten und von unten nach oben strömen.

4. Einrichtung nach einem der Ansprüche 1 bis 3, **dadurch gekennzeichnet, dass** die Presseinrichtung mindestens eine Walze (6) aufweist.

5. Einrichtung nach einem der Ansprüche 1 bis 4, **dadurch gekennzeichnet, dass** die Presseinrichtung mindestens zwei zueinander gegenüberliegend angeordnete Walzen (6) aufweist, zwischen bzw. an denen das obere und das untere Förderband (3, 4) sowie das dazwischen transportierbare Vlies (5) oder Vliesvorprodukt zusammendrückbar oder abstützbar sind.

6. Einrichtung nach einem der Ansprüche 1 bis 5, **dadurch gekennzeichnet, dass** der Abstand zwischen dem oberen und dem unteren Förderband (3, 4) mittels der Presseinrichtung zumindest in einem Teilbereich einstellbar bzw. verringerbar ist.

7. Einrichtung nach einem der Ansprüche 1 bis 6, **dadurch gekennzeichnet, dass** die Heizzone (1) in Förderrichtung der Förderbänder (3, 4) gesehen, vor der Kühlzone (2) angeordnet ist.

## Claims

1. Apparatus for the heat treatment of a non-woven material (5) or a non-woven precursor product comprising at least one heating zone (1) and at least one cooling zone (2), an upper conveyor belt (3), a lower conveyor belt (4) and at least one additional pressing device (6, 7), wherein the non-woven material (5) or the non-woven precursor product can be transported between the conveyor belts (3, 4) and the upper and the lower conveyor belts (3, 4) extend as continuous belts at least over the region of the heating zone (1), the cooling zone (2) and an intermediate region optionally arranged therebetween, and the conveyor belts (3, 4) and the non-woven material (5) or non-woven precursor product which can be transported therebetween can be compressed or supported at least region-wise by means of the additional pressing device (6, 7), wherein the non-woven material (5) or non-woven precursor product can be heated in the heating zone (1) by means of hot gases, preferably by means of hot air, and/or can be cooled in the cooling zone (2) by means of cool gases, preferably by means of cool air, **characterised in that** viewed in the transport direction of the conveyor belts (3, 4) the pressing device (6, 7) is arranged preferably directly downstream of the heating zone (1).

2. Apparatus according to claim 1 **characterised in that** the lower and/or the upper conveyor belt (3, 4) has or have preferably regularly arranged openings for gases to pass through.

3. Apparatus according to one of claims 1 and 2 **characterised in that** the hot gases in the heating zone (1) and/or the cool gases in the cooling zone (2) flow in region-wise fashion, preferably alternately, from above downwardly and from below upwardly.

4. Apparatus according to one of claims 1 to 3 **characterised in that** the pressing device has at least one roller (6).

5. Apparatus according to one of claims 1 to 4 **characterised in that** the pressing device has at least two mutually oppositely arranged rollers (6), between or at which the upper and lower conveyor belts (3, 4) and the non-woven material (5) or non-woven precursor product which can be transported therebetween can be compressed or supported.

6. Apparatus according to one of claims 1 to 5 **characterised in that** the spacing between the upper and lower conveyor belts (3, 4) is adjustable or reducible at least in a partial region by means of the pressing device.

7. Apparatus according to one of claims 1 to 6 **characterised in that** viewed in the conveyor direction of the conveyor belts (3, 4) the heating zone (1) is arranged upstream of the cooling zone (2).

## Revendications

1. Dispositif de traitement thermique d'un non tissé (5) ou d'un avant-produit de non tissé, avec au moins une zone de chauffage (1) et au moins une zone de refroidissement (2), une bande transporteuse supérieure (3), une bande transporteuse inférieure (4) et au moins un dispositif de pressage (6, 7) supplémentaire, le non tissé (5) ou l'avant-produit de non tissé étant susceptible d'être transporté entre les bandes transporteuses (3, 4), et la bande transporteuse supérieure ainsi que la bande transporteuse inférieure (3, 4) s'étendant, sous forme de bandes continues, au moins sur la région de la zone de chauffage (1), de la zone de refroidissement (2) et une région intermédiaire, disposée le cas échéant entre elles, et les bandes transporteuses (3, 4), ainsi que le non tissé (5) ou l'avant-produit de non tissé, susceptible d'être transporté entre elles, étant susceptibles d'être comprimées ou étant susceptibles d'être soutenues, au moins par régions, à l'aide du dispositif de pressage (6, 7) supplémentaire, le non tissé (5), ou l'avant-produit de non tissé, étant susceptible d'être chauffé dans la zone de chauffage (1), au moyen de gaz très chauds, de préférence au moyen d'air très chaud, et/ou étant susceptible d'être refroidi dans la zone de refroidissement (2), au moyen de gaz froids, de préférence au moyen d'air froid, **caractérisé en ce que** le dispositif de pressage (6, 7) est disposé derrière la zone de refroidissement (1), de préférence immédiatement derrière elle, en observant dans la direction de transport des bandes transporteuses (3, 4).

2. Dispositif selon la revendication 1, **caractérisé en ce que** la bande transporteuse inférieure et/ou la bande transporteuse supérieure (3, 4) présente(nt) des ouvertures, de préférence réparties régulièrement, pour le passage de gaz.

3. Dispositif selon l'une des revendications 1 ou 2, **caractérisé en ce que** les gaz très chauds s'écoulent dans la zone de chauffage (1) et/ou les gaz froids s'écoulement dans la zone de refroidissement (2), par régions, de préférence de manière alternée, de haut en bas et de bas en haut.

4. Dispositif selon l'une des revendications 1 à 3, **caractérisé en ce que** le dispositif de pressage présente au moins un rouleau (6).

5. Dispositif selon l'une des revendications 1 à 4, **caractérisé en ce que** le dispositif de pressage présente au moins deux rouleaux (6), disposés de manière mutuellement opposée, entre lesquels, ou sur lesquels, la bande transporteuse supérieure et la bande transporteuse inférieure (3, 4), ainsi que le non tissé (5), ou avant-produit de non tissé, susceptible d'être transporté entre elles, sont susceptibles d'être comprimés ou sont susceptibles d'être soutenus.

6. Dispositif selon l'une des revendications 1 à 5, **caractérisé en ce que** l'espacement, entre la bande transporteuse supérieure et la bande transporteuse inférieure (3, 4) est susceptible d'être réglé, ou susceptible d'être diminué, au moins dans une région partielle, à l'aide du dispositif de pressage.

7. Dispositif selon l'une des revendications 1 à 6, **caractérisé en ce que** la zone de chauffage (1) est disposée en amont de la zone de refroidissement (2), en observant dans la direction de transport des bandes transporteuses (3, 4).
